# EUROPEAN PATENT SPECIFICATION

(11) **EP 1 569 069 B1**
(45) Date of publication and mention of the grant of the patent: **11.10.2006**
(21) Application number: 04075586.0
(22) Date of filing: 26.02.2004
(51) Int. Cl.: G06F 3/02, G06F 1/16, G06F 3/023

(54) **Keyboard arrangement for handheld electronic devices**
Tastaturanordnung für ein tragbares elektronisches Gerät
Disposition de clavier pour un appareil électronique portatif

(43) Date of publication of application: 31.08.2005
(73) Proprietor: Research In Motion Limited, Waterloo, Ontario N2L 3W8 (CA)
(72) Inventor: Griffin, Jason Tyler, Waterloo, Ontario N2T 2J5 (CA); Tyneski, Frank Mathew, Waterloo, Ontario N2H 3B3 (CA)
(74) Representative: Rickard, David John

(56) References cited:
- WO-A-02/075514
- WO-A-03/056784
- US-A1- 2003 063 070
- US-B2- 6 628 511

## Description

This invention relates to a keyboard arrangement for a handheld electronic device. In particular, the invention relates to a keyboard arrangement for reducing the size of a handheld electronic device.

Portable hand-held electronic devices such as a Personal Data Assistant (PDA), a two-way pager or a two-way email-messaging device are becoming increasingly important. However, to improve portability and hence widespread usage of these devices, the size of these devices must be reduced. Due to current electronic technology, the thickness of hand-held electronic devices is at an acceptable level. However, device users would like to see a reduction in the width of these handheld devices. In fact some users would prefer a handheld device that resembles a cell phone in which the handheld device may be slightly increased in length but reduced in width.

The electronic components that are used to construct these handheld devices can facilitate a size reduction for virtually any dimension of the device. However, it is the conventional physical user interface, such as the display and the input devices (i.e. keyboard), which places a limitation on the reduction in the length and width of these devices. The display must be maintained at a certain size so that user interaction with the device is not degraded based on the functionality that the device is providing for the user (such as text messaging, web-surfing or game-playing). Accordingly, there is a need for an alternative configuration for the input device that will facilitate a reduction in size for the hand-held electronic device.

The main input device for hand-held electronic devices is a keyboard. Keyboards are typically laid out in the QWERTY fashion. QWERTY is a reference to the order of the keys starting with the left most key in the uppermost row of the keyboard. In the standard QWERTY keyboard layout, the letter keys are laid out in three rows with a minimum of seven letter keys per row. In addition, special function keys are usually provided for entering numerals, punctuation or for editing purposes (i.e. the spacebar key, the return key, the delete key, etc.). Foreign language keyboards follow a similar keyboard layout that is referred to as an AZERTY or QWERTZ format.

In order to reduce the size of the keyboard, one may reduce the number of letter keys by combining several letters on one key. Another option is to provide a key with more than one function. For instance, some keys can represent a letter and a number, or a letter and an editing feature. Another key can be depressed, such as an ALT key, to choose between the symbol or function that a given key provides. However, if not done properly, a reduction in the number of keys may reduce the usefulness of the input device. For instance, it may take longer for the user to interact with the handheld device which will lead to frustration on the part of the user. This is unacceptable since it is desirable to have a handheld device with a smaller keyboard that allows the user to maintain typing speed and accuracy. In addition, following a standard QWERTY layout in which the keys are provided in substantially horizontal rows still results in a handheld device in which the width of the device is not greatly reduced.

Another problem with the QWERTY layout is that the user will typically grip the handheld device such that their fingers support the handheld device and their thumbs are used for typing. Consequently, a variety of thumb movements are required in order to reach all of the keys on the keyboard. These thumb movements for conventional QWERTY keyboards generally involve a combination of multi-directional movements that are not naturally occurring movements of the thumbs. This will lead to premature user fatigue.

US6628511 discloses in one embodiment thereof a handheld electronic device configured for thumb-typing by a user, the handheld electronic device comprising a display and a keyboard, wherein said keyboard comprises a first group of keys and a second group of keys arranged on respective sides of a central part of said device, each of said first and second groups of keys comprising a plurality of substantially linear rows of keys comprising at least an upper row and a lower row, the upper row being disposed generally above the lower row, each of said rows making an angle generally between 30 and 50 degrees with respect to said central part of the device. US6628511 addresses the problem of glare on a display screen part of the device by placing the screen below user input keys. It also addresses the problem of better user accessibility and comfort by arranging the keys in angled rows with respect to the central part of the device.

US2003/0063070 also discloses a handheld electronic device having a keyboard configured for thumb-typing by a user. Of the various embodiments of the device disclosed in US2003/0063070, the keyboard comprises two sets of keys arranged on respective sides of a vertical midline of the keyboard, each set of keys comprising a plurality of rows. Within each row, the angle of incline of each of the plurality of elongated keys of that row increases with distance of the key from the midline. However, for those embodiments where the rows are substantially linear, the angle of incline of each row with respect to the vertical midline is the same for all rows. US2003/0063070 is also concerned with providing improved user accessibility and comfort to the keys of the device's keyboard.

WO02/075514 discloses a keyboard for a handheld device having a plurality of keys that are arranged in arced rows so that the keys can be operated by both hands of a user. The aim of the invention is to achieve simple and rapid operation of the keys. However, WO02/075514 teaches that some of the keys are arranged on two laterally extending side pieces which increase the width of the handheld device.

Accordingly, there is a need for handheld devices with a keyboard interface that is compact yet at the same time functional. The keys of the keyboard should be arranged to reduce the size of the keyboard interface while at the same time better reflecting the natural movements of the human thumb as well as maintaining functionality and ease of use.

The invention comprises a V-shaped keyboard layout for a handheld device that results in a reduction in the width of the handheld device compared to a similar handheld device that employs a conventional QWERTY keyboard. A variety of angles can be used for the rows of the V-shaped keyboard to vary the width of the handheld device. Further, the shape of the keyboard is such that the keys conform to the natural movements of the user's thumbs and simply allow the user to move his/her thumbs in arced movements while holding the device with their fingers. The result is that the user's hands do not get fatigued as quickly as they would if the user was interacting with a conventional keyboard in which the user has to vertically extend and retract their thumbs which is both uncomfortable and tiresome.

The rows of the V-shaped keyboard are at a different angle with respect to a longitudinal midline of the handheld device. For instance, if the V-shaped keyboard has three rows, the bottom row is at a larger angle than the middle row, and the middle row is at a larger angle than the top row. This layout allows the user's thumbs to more naturally move over the keys as well as allows for a contoured shape for the sides of the handheld electronic device.

In a further alternative, it is preferable to provide a slight convex arc for each row of the V-shaped keyboard to further accommodate the natural movement of the user's thumbs as well as reduce the width of the keyboard.

Preferably, the order and rows of the keys in the V-shaped keyboard remain in the same order as a conventional QWERTY layout so that the user does not have to learn a new keyboard layout. Further, the width of the keys in the V-shaped keyboard can be reduced in size compared to the width of the keys in a conventional keyboard. However, the height of the keys is increased to maintain an acceptable footprint for the keys of the V-shaped keyboard. This allows the user to accurately depress intended keys on the V-shaped keyboard and avoid hitting more than one key at the same time. The layout of the V-shaped keyboard and the shape of the keys allow the user to maintain the same typing speed and accuracy that they would have while typing on a conventional QWERTY keyboard.

In addition, the width reduction that is provided by the keyboard of the invention allows the handheld device to more closely approximate the shape and ergonomics of conventional mobile phones. Accordingly, a handheld device that also provides phone functionality can incorporate the keyboard of the invention.

In accordance with a first aspect, the invention provides a handheld electronic device configured for thumb-typing by a user, the handheld electronic device comprising a display and a keyboard, wherein said keyboard comprises a first group of keys and a second group of keys arranged on respective sides of a vertical midline of said keyboard, each of said first and second groups of keys comprising a plurality of substantially linear rows of keys comprising at least an upper row and a lower row, the upper row being disposed generally above the lower row, each of said rows making an angle generally between 30 and 50 degrees with respect to said vertical midline of the keyboard, characterized in that the lower row of keys makes an angle with respect to the vertical midline of the keyboard that is greater than the angle made by the upper row with respect to said midline and the keys of the upper row are spaced substantially vertically above corresponding keys of the lower row.
For each group of keys the upper row of keys comprises a first row of keys and the lower row of keys comprises a third row of keys, each group of keys having a second row of keys, the arrangement of the rows being such that the first row of keys is disposed above the second row of keys and the second row of keys is disposed above the third row of keys, the first row of keys making a first angle with respect to the vertical midline, the second row of keys making a second angle with respect to the vertical midline and the third row of keys making a third angle with respect to the vertical midline, wherein the third angle is larger than the second angle and the second angle is larger than the first angle. Preferably, the first angle is chosen to be between about 30 and 40 degrees. Further, the second angle is chosen to be between about 34 and 44 degrees but bigger than the first angle. Also, the third angle is chosen to be between about 40 and 50 degrees but bigger then the second angle.

In accordance with a second aspect, the invention provides a keyboard for use with a handheld electronic device. The keyboard comprises a first group of keys and a second group of keys arranged on respective sides of a vertical midline of said keyboard, each of said first and second groups of keys comprising a plurality of substantially linear rows of keys comprising at least an upper row and a lower row, the upper row being disposed generally above the lower row , each of said rows making an angle generally between 30 and 50 degrees with respect to said vertical midline of the keyboard, characterized in that the lower row of keys makes an angle with respect to the vertical midline of the keyboard that is greater than the angle made by the upper row with respect to said midline and the keys of the upper row are spaced substantially vertically above corresponding keys of the lower row.

### Brief description of the drawings

For a better understanding of the invention and to show more clearly how it may be carried into effect, reference will now be made, by way of example only, to the accompanying drawings which show exemplary embodiments of the invention and in which:
Figure 1 is a front view of a handheld electronic device with a keyboard in accordance with the invention;
Figure 2 is a front view of the handheld electronic device of Figure 1 illustrating geometrical properties of the layout for the keys of the keyboard; and,
Figure 3 is a front view of another embodiment of the handheld electronic device with a keyboard in accordance with the invention.

### Description of preferred embodiments

In the following detailed description, numerous specific details are set forth in order to provide a thorough understanding of the invention. However, it will be understood by those of ordinary skill in the art that the invention may be practiced without these specific details. In other instances, well-known methods, procedures and components have not been described in detail so as not to obscure the invention.

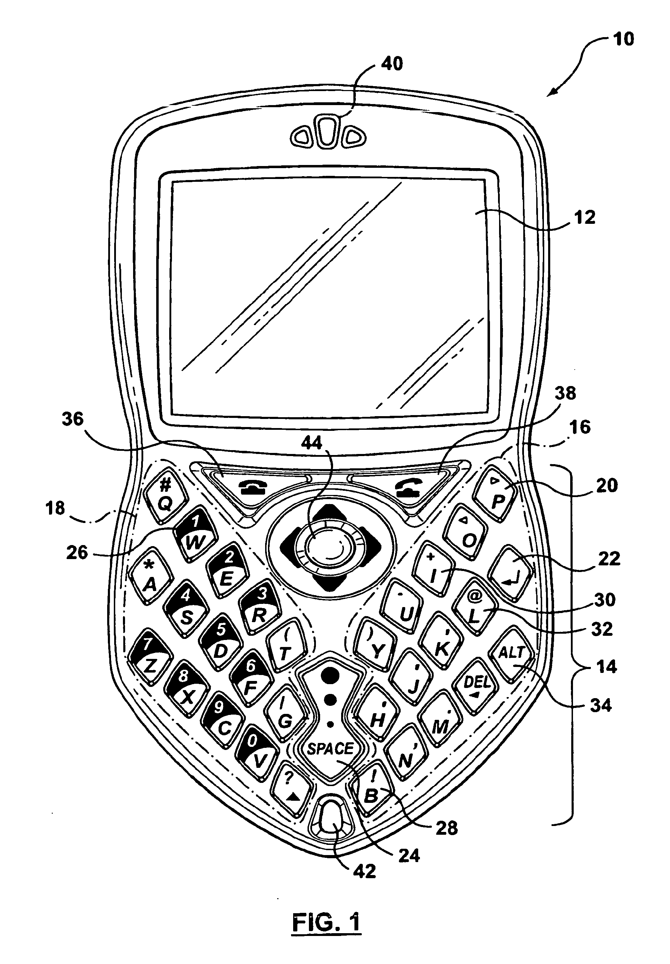

Referring now to Figure 1, shown therein is a front view of a handheld electronic device **10** that includes a display **12** and a keyboard **14** in accordance with the invention. The handheld electronic device **10** does not specifically relate to any one particular type of device but is shown for exemplary purposes to demonstrate an embodiment of the keyboard **14** of the invention. It should be understood by those skilled in the art that the handheld electronic device **10** contains other components, such as a processor, a transceiver, memory, etc. and associated software to implement the functionality of the device. Those skilled in the art are knowledgeable of these components. Hence, these components will not be shown or described.

The keyboard **14** comprises a plurality of keys generally configured into a first group of keys **16** and a second group of keys **18**. The keys include letter keys, such as the key **20** which represents the letter P, and editing keys such as the RETURN key **22** which is represented by the symbol 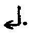 . The keyboard **14** also includes a spacebar key **24** located between the two groups of keys **16** and **18**. The location of the spacebar key **24** simplifies the movement required for the user's thumb to depress the spacebar key **24**. In particular, the location of the spacebar key **24** allows the user to use either the right or left thumb to depress the spacebar key **24**. In addition, it should be noted that the spacebar key **24** is vertically disposed on the keyboard **14**. This allows for a reduction in the width of the keyboard **14** without necessarily having to reduce the size of the spacebar key **24**. The spacebar key **24** also has concave sides which allows the spacebar key **24** to be placed in an "interlocking" or mating fashion with the adjacent keys from the first and second groups of keys **16** and **18**. These adjacent keys are shaped in a diamond configuration with convex outer sides. The shape of the keys is described in more detail below.

The total number of the keys in the keyboard **14** is less than the number of keys that are contained on a conventional QWERTY keyboard that is used for a personal computer. The reduction in the number of the keys in the keyboard **14** provides a first means for reducing in the physical size of the keyboard **14**. The number of keys have been reduced by using a key for more than one function. For instance, a key can represent a letter and a number such as key **26**, a key can represent a letter and a punctuation mark such as key **28,** a key can represent a letter and a mathematical operation such as key **30**, or a key can represent a letter and a symbol such as key **32.** If the user desires to select the alternate functionality or the secondary characters that are provided by a key, then the user can depress the key at the same time as depressing the ALT key **34**. The number of keys in the keyboard **14** and the functionality/symbols provided by the keys of the keyboard **14** do not have to strictly follow what has been described in this embodiment.

The user interface for the handheld electronic device **10** also includes a pair of special function keys **36** and **38**. In this particular embodiment, the special function keys **36** and **38** can be used to start and end a telephone conversation using the handheld electronic device **10**. In other types of handheld electronic devices, the special function keys **36** and **38** may be omitted. The handheld electronic device **10** also allows the user to connect to a remote base station so that the user can send and receive emails, use the internet and the like.

In this exemplary embodiment, the handheld electronic device **10** can also be used as a mobile phone. Accordingly, the handheld electronic device **10** includes a speaker **40** situated at an upper portion where the user would put their ear. The device **10** also includes a microphone (not shown) situated at a bottom portion or edge. A standard speaker and microphone can be used as is known by those skilled in the art. The smaller keyboard **14** allows the device **10** to follow the shape and ergonomics of conventional mobile phones while providing the functionality of a PDA. The handheld electronic device **10** also includes an aperture **42**, also known as a lanyard hole, which allows the user to attach the handheld electronic device to a chain or rope so that the user does not lose the handheld electronic device **10**.

The user interface for the handheld electronic device **10** also includes a navigation pad **44** that is located between the first and second group of keys **16** and **18** (alternatively a thumbwheel with associated scroll keys can be used). The navigation pad **44** can be used to scroll through information that is shown on the display **12**. For instance, the user may be reading a long email message that cannot be fully shown on the display **12**. Accordingly, the user actuates the navigation pad **44** to scroll through the email message. The navigation pad **44** may also provide other functionality such as a selection feature. For instance, the user may want to navigate internet web pages using the handheld electronic device **10**. Accordingly, the user can depress the navigation pad **44** to select a particular web link on a web page, or to open an application. Advantageously, the navigation pad **44** is located between the first and second groups of keys **16** and **18** which simplifies the movement required for the user's thumb to actuate the navigation pad **44.** In particular, the location of the navigation pad **44** allows the user to extend and slightly rotate the right or left thumb to actuate the navigation pad **44**.

The location of the spacebar key **24**, the pair of special function keys **36** and **38** and the navigation pad **44** is not restricted to what is shown in Figure 1. Although the locations shown in Figure 1 are preferable, it may be possible for the spacebar key **24**, the pair of special function keys **36** and **38** and the navigation pad **44** to be located at other areas of the handheld electronic device **10**. Alternatively, depending on the functionality of the handheld electronic device **10**, it is not necessary for the pair of special function keys **36** and **38** and/or the navigation pad **44** to be included on the handheld electronic device **10**. Their functionality may not be needed, or alternative methods can be used to provide their functionality.

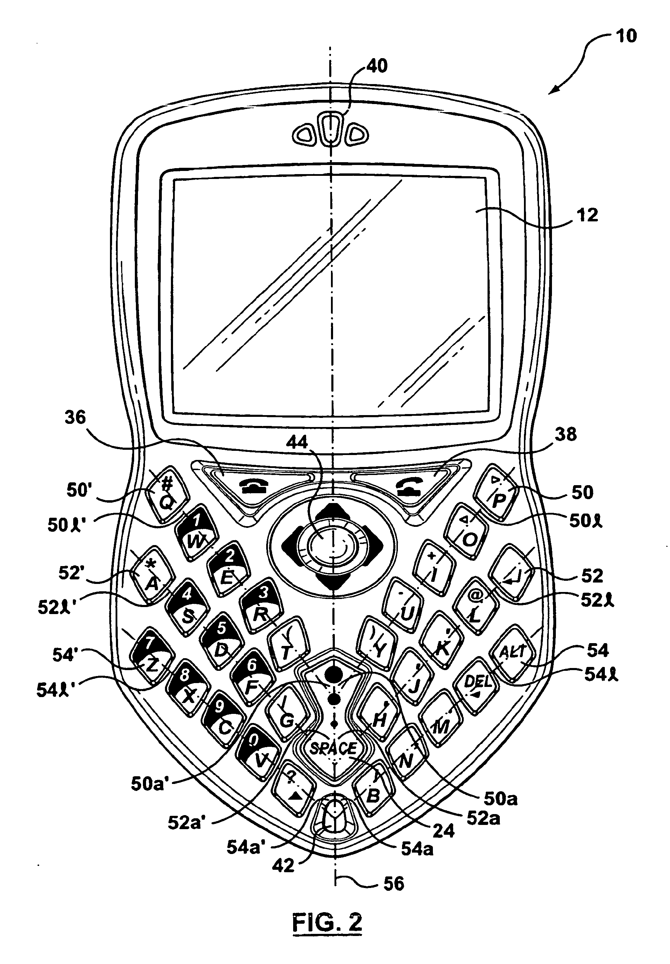

Referring now to Figure 2, shown therein is a front view of the handheld electronic device **10** illustrating geometrical properties of the layout of the keys in the keyboard **14**. The keys in the keyboard **14** are arranged in multiple rows. The first group of keys **16** includes a first row of keys **50**, a second row of keys **52** and a third row of keys **54**. Likewise, the second group of keys **18** includes a first row of keys **50'**, a second row of keys **52'** and a third row of keys **54'**.

In addition, the first group of keys **16** and the second group of keys **18** are divided by a longitudinal midline **56** of the handheld electronic device **10**. In this exemplary embodiment, the spacebar key **24** and the navigation pad **44** straddle the longitudinal midline **56** in a symmetrical fashion. Further, the first and second group of keys **16** and **18** and the special function keys **36** and **38** are symmetrically oriented about the longitudinal midline **56**. This use of symmetry further enhances the user interactivity with the handheld electronic device **10**.

Each of the rows of keys **50, 50', 52, 52', 54** and **54'** contain an equivalent number of keys. This allows the keyboard **14** to be arranged in a more symmetrical, compact form. Further, the rows of keys **50, 50', 52, 52', 54** and **54'** are generally arranged along lines **50l, 50l', 52l, 52l', 54l** and **54l'**. The keys may be disposed in a linear manner along the lines **50l, 50l', 52l, 52l', 54l** and **54l'.** Alternatively, as is shown in Figure 2, the keys can be disposed in an arced fashion along the lines **50l, 50l', 52l, 52l', 54l** and **54l'** such that the keys form a slight convex arc along each row **50, 50', 52, 52'**, **54** and **54'**. This convex arc allows the user's thumb to more naturally move along the keys of the keyboard 14. Further, the arc allows for the keys to be placed slightly closer to each other and hence reduce the width of the keyboard.
The lines 50l, 50l', 52l, 52l', 54l and 54l' along which the rows of keys 50, 50', 52, 52', 54 and 54' are generally disposed respectively form angles 50a, 50a', 52a, 52a', 54a and 54a' with the longitudinal midline 56 of the handheld electronic device 10. The angles 50a, 52a and 54a form positive angles with respect to the longitudinal midline 56 and the angles 50a', 52a' and 54a' form negative angles with respect to the longitudinal midline 56. Each opposite angle will be substantially similar, i.e. angles 50a and 50a' will be substantially similar, angles 52a and 52a' will be substantially similar and angles 54a and 54a' will be substantially similar to ensure continuity for the symmetry of the device 10. To simplify the remainder of the description, the orientation of the rows and the associated angles will be described for the first group of keys 16. It should be understood that similar values can be used for the second group of keys 18.
The use of appropriate values for the angles 50a, 52a and 54a allow the width of the handheld electronic device 10 to be reduced. In general, selecting a lower value for the angles 50a, 52a and 54a results in a reduction of the width and an increase in the length of the handheld electronic device 10. Accordingly, it is desirable to select values for the angles 50a, 52a and 54a such that there is a tradeoff between width reduction and length increase as well as providing a key layout that accommodates the natural movement of the user's thumbs during thumb-typing. In particular, the inventors have found that selecting values for the angles 50a, 52a and 54a in the range of 30 to 50 degrees is beneficial for reducing the width of the keyboard 14 while allowing the user's thumb to naturally move over the keys in various rows of the keyboard 14.
Alternatively, and more preferably, the angles 50a, 52a and 54a of each row of keys 50, 52 and 54 do not necessarily have to be the same. In one instance, the angles 50a, 52a and 54a may have similar values. However, and more preferably, the angles 50a, 52a and 54a have different values. For instance, the inventors have found that it is beneficial for angle 54a to be larger than angle 52a and for angle 52a to be larger than angle 50a. In particular, the inventors have found that it is preferable that angle 54a is generally within a range of between 40 and 50 degrees, that angle 52a is generally within a range of 34 and 44 degrees and that angle 50a is generally within a range of 30 and 40 degrees with respect to the longitudinal midline 56 of the handheld electronic device 10. In one preferred exemplary embodiment, the angle 54a is approximately 48 degrees, the angle **52a** is approximately 44 degrees and the angle **50a** is approximately 40 degrees. This results in a width of approximately 60 mm for the device **10** when the keys have a height of 8 mm and a width of 5 mm and a height of approximately 26 mm for the inner portion of the group of keys **16** and **18**. This keyboard allows for a width reduction in the device of approximately 10 to 15 mm compared to a more traditional keyboard layout.

The use of different values for the angles **50a, 52a** and **54a** allow the lateral extent of each row **50, 52** and **54** to be varied with respect to the longitudinal midline **56**. This allows the sides of the housing of the handheld electronic device **10** to be contoured. For instance, angle **54a** may be larger than angle **52a** and angle **52a** may be larger than angle **50a**. This allows the sides of the housing to be contoured inwards as one moves up the row of keys which results in the handheld electronic device having a housing with concave sides. This concave side allows the user to more effectively grip the handheld electronic device **10** in one or two hands. The concave sides of the handheld electronic device **10** can also be slightly serrated or have ridges on them to provide the user with a better grip on the handheld electronic device **10**.

The use of different values for the angles **50a, 52a** and **54a** also results in a greater amount of space between adjacent rows for the keys in the outer portion of the rows that are above one another. For instance, there is more space between the ALT key **34** in row **54** and the 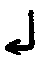 key **22** in row **52** compared to the space between the B key in row **54** and the H key in row **52**. This is beneficial since the user's thumbs are in a more vertical position near the outer portions of the rows of keys and in the vertical position, it is not as easy for the user's thumb to navigate between keys.

The keys of the keyboard **14** can have a variety of shapes such as circular, oval, square, rectangular, etc. However, to increase the compactness of the keyboard **14**, it is preferable for the keys to have a shape that allows for placing the keys in an interlocking or dovetail manner. Accordingly, the keys preferably have a shape such that sides of adjacent keys in a given row complement one another especially given the fact that the rows of keys are on an angle. The inventors have found that it is preferable for the keys to have a diamond shape since the right upper and left lower diagonal sides of the diamond shape allow adjacent keys on a given row of the keyboard **14** to be placed closer to one another.

The keys of the keyboard **14** may also have different sizes. For instance, keys that are used more often can have a larger size than the other keys in the keyboard **14**. However, to increase the compactness of the keyboard **14** and to maintain continuity for data entry, it is preferable for the keys of the keyboard **14** to be similarly sized. For reducing the width of the device **10**, it is also preferable to reduce the width of the keys compared to those used in conventional keyboards. However, the height of the keys is increased to maintain an acceptable footprint for the keys of the V-shaped keyboard. The keys are also sized such that they are large enough for appropriate contact to be made by the user's thumb and are sufficiently spaced apart so that the user does not depress multiple keys during one keystroke. As an example, the keys may have a height of 8 mm and a width of 5 mm.

The arrangement of the keys of the keyboard **14** of the invention allow for a narrower handheld electronic device while maintaining the functionality of a conventional keyboard that has keys laid out in a straight row fashion. Further, the locations of the keys in the angled rows have been optimized to facilitate thumb-typing. Since handheld electronic devices are generally typed on by employing the thumbs, a narrower handheld electronic device in accordance with the invention will require less movement of the thumbs when typing. Further, the angled rows allow for a different, more natural pattern of thumb movement. Also, by arranging the keys in a given row of the keyboard **14** along an arc or a convex line of curvature, the user's thumb performs a series of arc-like movements which is more natural and less tiresome for the user. In addition, by reducing the width of the handheld device, the user can hold the device in the palm of one hand and use the fingers of the other hand to type on the keyboard **14** if the user does not want to type with their thumbs. Further, the width reduction of the keyboard **14** allows the shape of the device **10** to better approximate a mobile phone which is beneficial when the device **10** is used in that capacity.

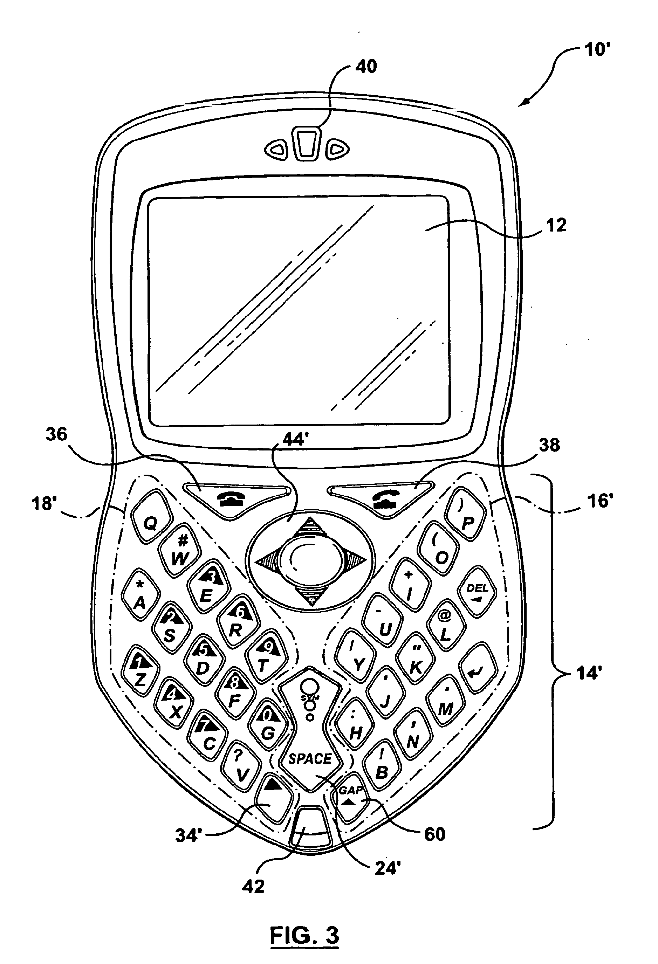

Referring now to Figure 3, shown therein is an alternative embodiment of the handheld electronic device **10'** with a slightly different keyboard **14'**. In this case, the keyboard **14'** maintains all of the geometrical properties of the keyboard **14**. However, the keyboard **14'** has a slightly different layout in terms of the functionality that is provided by the keys in the first and second groups of keys **16'** and **18'.** For instance, the ALT key **34'** is situated just at the left of the aperture **42.** In addition, the keyboard **14'** includes a spacebar key **24'** with a SYM functionality. To access the SYM functionality, the spacebar key **24'** is depressed at the same time as the ALT key **34'**. The SYM functionality provides access to several characters that are not directly provided by the keyboard **14'** such as $, %, >>, &, etc. by displaying the symbols on the display **12** and allowing the user to select one of the characters. The keyboard **14'** also includes a shift key **60** just to the right of the aperture **42** and different placement of the numerical secondary characters provided by the keys in the second group of keys **18**. The secondary function of the shift key **60** is to provide caps lock mode. The device **10'** also includes a slightly different navigation pad **44'** that functions similarly to navigation pad **44**.

It should be understood that various modifications can be made to the embodiments described and illustrated herein, without departing from the present invention, the scope of which is defined in the appended claims. For instance, the invention can also be used with foreign language keyboard layouts such as the AZERTY and QWERTZ keyboard layouts.

## Claims

1. A handheld electronic device (10) configured for thumb-typing by a user, the handheld electronic device (10) comprising a display (12) and a keyboard (14), wherein said keyboard (14) comprises a first group of keys (16) and a second group of keys (18) arranged on respective sides of a vertical midline (56) of said keyboard (14), each of said first and second groups of keys (16, 18) comprising a plurality of substantially linear rows of keys (50, 50', 52, 52', 54, 54') comprising at least an upper row (50, 50') and a lower row (54, 54'), the upper row (50, 50') being disposed generally above the lower row (54, 54'), each of said rows making an angle (50a, 50a', 52a, 52a', 54a, 54a') generally between 30 and 50 degrees with respect to said vertical midline (56) of the keyboard, **characterized in that** the lower row of keys (54, 54') makes an angle (54a, 54a') with respect to the vertical midline (56) of the keyboard (14) that is greater than the angle (50a, 50a') made by the upper row (50, 50') with respect to said midline and the keys of the upper row (50, 50') are spaced substantially vertically above corresponding keys of the lower row (54, 54').

2. The handheld electronic device (10) of claim 1, wherein for each group of keys (16, 18) the upper row of keys comprises a first row of keys (50, 50') and the lower row of keys comprises a third row of keys (54, 54'), each group of keys (16, 18) having a second row of keys (52, 50), the arrangement of the rows being such that the first row of keys (50, 50') is disposed above the second row of keys (52, 52') and the second row of keys is disposed above the third row of keys (54, 54'), the first row of keys making a first angle (50a, 50a') with respect to the vertical midline (56), the second row of keys making a second angle (52a, 52a') with respect to the vertical midline and the third row of keys making a third angle (54a, 54a') with respect to the vertical midline, wherein the third angle is larger than the second angle and the second angle is larger than the first angle.

3. The handheld electronic device (10) of claim 2, wherein the first angle (50a, 50a') is chosen to be between 30 and 40 degrees.

4. The handheld electronic device (10) of claim 3, wherein the second angle (52a, 52a') is chosen to be between 34 and 44 degrees but larger than the first angle (50a, 50a').

5. The handheld electronic device (10) of claim 4, wherein the third angle (54a, 54a') is chosen to be between 40 and 50 degrees but larger than the second angle (52a, 52a').

6. The handheld electronic device (10) of any one of claims 1 to 5, wherein the device (10) has contoured sides with upper and lower convex shaped portions and a concave shaped mid-portion.

7. The handheld electronic device (10) of any one of claims 1 to 6, wherein the keyboard (14) comprises a spacebar key (24) vertically disposed in between the first and second groups of keys (16, 18).

8. The handheld electronic device (10) of claim 7, wherein the spacebar key (24) is contoured to mate with adjacent keys in the first and second group of keys (16, 18).

9. The handheld electronic device (10) of any one of claims 1 to 8, wherein the device further comprises a navigation pad (44) disposed between the upper rows (50, 50') of the first and second group of keys (16, 18).

10. The handheld electronic device (10) of any one of claims 1 to 9, wherein the keys in the first and second groups of keys (16, 18) have sides shaped in a complementary manner for mating with adjacent keys in the same row or an adjacent row.

11. The handheld electronic device (10) of claim 10, wherein the keys in the first and second groups of keys (16, 18) are diamond shaped.

12. A keyboard (14) for use with a handheld electronic device (10), the keyboard (14) comprising a first group of keys (16) and a second group of keys (18) arranged on respective sides of a vertical midline (56) of said keyboard (14), each of said first and second groups of keys (16, 18) comprising a plurality of substantially linear rows of keys (50, 50', 52, 52', 54, 54') comprising at least an upper row (50, 50') and a lower row (54, 54'), the upper row (50, 50') being disposed generally above the lower row (54, 54'), each of said rows making an angle (50a, 50a', 52a, 52a', 54a, 54a') generally between 30 and 50 degrees with respect to said vertical midline (56) of the keyboard, **characterized in that** the lower row of keys (54, 54') makes an angle (54a, 54a') with respect to the vertical midline (56) of the keyboard (14) that is greater than the angle (50a, 50a') made by the upper row (50, 50') with respect to said midline and the keys of the upper row (50, 50') are spaced substantially vertically above corresponding keys of the lower row (54, 54').

13. The keyboard (14) of claim 12, wherein for each group of keys (16, 18) the upper row of keys comprises a first row of keys (50, 50') and the lower row of keys comprises a third row of keys (54, 54'), each group of keys (16, 18) having a second row of keys (52, 50), the arrangement of the rows being such that the first row of keys (50, 50') is disposed above the second row of keys (52, 52') and the second row of keys is disposed above the third row of keys (54, 54'), the first row of keys making a first angle (50a, 50a') with respect to the vertical midline (56), the second row of keys making a second angle (52a, 52a') with respect to the vertical midline and the third row of keys making a third angle (54a, 54a') with respect to the vertical midline, wherein the third angle is larger than the second angle and the second angle is larger than the first angle.

14. The keyboard (14) of claim 13, wherein the first angle (50a, 50a') is chosen to be between 30 and 40 degrees.

15. The keyboard (14) of claim 14, wherein the second angle (52a, 52a') is chosen to be between 34 and 44 degrees but larger than the first angle (50a, 50a').

16. The keyboard (14) of claim 15, wherein the third angle (54a, 54a') is chosen to be between 40 and 50 degrees but larger than the second angle (52a, 52a').

17. The keyboard (14) of any one of claims 12 to 16, wherein the keyboard further comprises a spacebar key (24) vertically disposed in between the first and second group of keys (16, 18), the spacebar key (24) being contoured to mate with adjacent keys in the first and second group of keys (16, 18); and /or a navigation pad (44) disposed in between the upper rows (50, 50') of the first and second group of keys (16, 18).

18. The keyboard (14) any one of claims 12 to 17, wherein the keys in the first and second groups of keys (16, 18) have sides shaped in a complementary manner for mating with adjacent keys in the same row or an adjacent row

19. The keyboard (14) of claim 18, wherein the keys in the first and second groups of keys (16, 18) are diamond shaped.

20. The keyboard (14) of any one of claims 12 to 19, wherein additional functional keys (36, 38) are disposed between the upper rows (50, 50') of the first and second group of keys (16,18).

21. The keyboard (14) of any one of claims 12 to 20, wherein keys representing letters in the keyboard (14) are laid out according to one of a QWERTY layout, an AZERTY layout and a QWERTZ layout.

## Patentansprüche

1. Elektronisches Handgerät (10), das für das Daumentippen durch einen Benutzer konfiguriert ist, wobei das elektronische Handgerät (10) einen Bildschirm (12) und eine Tastatur (14) umfasst und die Tastatur (14) eine erste Tastengruppe (16) und eine zweite Tastengruppe (18) umfasst, die an jeweiligen Seiten einer vertikalen Mittellinie (56) der Tastatur (14) angeordnet sind, wobei sowohl die erste als auch die zweite Tastengruppe (16, 18) jeweils eine Vielzahl von im Wesentlichen linearen Tastenreihen (50, 50', 52, 52', 54, 54') umfassen, die mindestens eine obere Reihe (50, 50') und eine untere Reihe (54, 54') umfassen, wobei die obere Reihe (50, 50') im Allgemeinen über der unteren Reihe (54, 54') angeordnet ist und jede der Reihen bezüglich der vertikalen Mittellinie (56) der Tastatur in einem Winkel (50a, 50a', 52a, 52a', 54a, 54a') von im Allgemeinen 30 bis 50 Grad angeordnet ist, **dadurch gekennzeichnet, dass** die untere Tastenreihe (54, 54') bezüglich der vertikalen Mittellinie (56) der Tastatur (14) in einem Winkel (54a, 54a') angeordnet ist, der größer als der Winkel (50a, 50a') der oberen Reihe (50, 50') bezüglich der Mittellinie ist und die Tasten der oberen Reihe (50, 50') im Wesentlichen vertikal über entsprechenden Tasten der untere Reihe (54, 54') beabstandet sind.

2. Elektronisches Handgerät (10) nach Anspruch 1, wobei die obere Tastenreihe für jede Tastengruppe (16, 18) eine erste Tastenreihe (50, 50') umfasst und die untere Tastenreihe eine dritte Tastenreihe (54, 54') umfasst, wobei jede Tastengruppe (16, 18) eine zweite Tastenreihe (52, 50) aufweist, wobei die Anordnung der Reihen so beschaffen ist, dass die erste Tastenreihe (50, 50') über der zweiten Tastenreihe (52, 52') angeordnet ist und die zweite Tastenreihe über der dritten Tastenreihe (54, 54') angeordnet ist, wobei die erste Tastenreihe bezüglich der vertikalen Mittellinie (56) in einem ersten Winkel (50a, 50a') angeordnet ist, die zweite Tastenreihe bezüglich der vertikalen Mittellinie in einem zweiten Winkel (52a, 52a') angeordnet ist und die dritte Tastenreihe bezüglich der vertikalen Mittellinie in einem dritten Winkel (54a, 54a') angeordnet ist, wobei der dritte Winkel größer ist als der zweite Winkel und der zweite Winkel größer ist als der erste Winkel.

3. Elektronisches Handgerät (10) nach Anspruch 2, wobei der erste Winkel (50a, 50a') zwischen 30 und 40 Grad gewählt wird.

4. Elektronisches Handgerät (10) nach Anspruch 3, wobei der zweite Winkel (52a, 52a') zwischen 34 und 44 Grad, jedoch größer als der erste Winkel (50a, 50a') gewählt wird.

5. Elektronisches Handgerät (10) nach Anspruch 4, wobei der dritte Winkel (54a, 54a') zwischen 40 und 50 Grad, jedoch größer als der zweite Winkel (52a, 52a') gewählt wird.

6. Elektronisches Handgerät (10) nach einem der Ansprüche 1 bis 5, wobei das Gerät (10) konturierte Seiten mit einem oberen und einem unteren konvex geformten Abschnitt und einem konkav geformten Mittelabschnitt aufweist.

7. Elektronisches Handgerät (10) nach einem der Ansprüche 1 bis 6, wobei die Tastatur (14) eine Leertaste (24) umfasst, die vertikal zwischen der ersten und der zweiten Tastengruppe (16, 18) angeordnet ist.

8. Elektronisches Handgerät (10) nach Anspruch 7, wobei die Leertaste (24) so konturiert ist, dass sie zu den benachbarten Tasten in der ersten und zweiten Tastengruppe (16, 18) passt.

9. Elektronisches Handgerät (10) nach einem der Ansprüche 1 bis 8, wobei das Gerät des Weiteren ein Navigationsfeld (44) umfasst, das zwischen den oberen Reihen (50, 50') der ersten und zweiten Tastengruppe (16, 18) angeordnet ist.

10. Elektronisches Handgerät (10) nach einem der Ansprüche 1 bis 9, wobei die Tasten in der ersten und zweiten Tastengruppe (16, 18) Seiten aufweisen, die in einer komplementären Weise geformt sind, um zu benachbarten Tasten in derselben Reihe oder in einer benachbarten Reihe zu passen.

11. Elektronisches Handgerät (10) nach Anspruch 10, wobei die Tasten in der ersten und zweiten Tastengruppe (16, 18) diamantförmig sind.

12. Tastatur (14) zur Verwendung mit einem elektronischen Handgerät (10), wobei die Tastatur (14) eine erste Tastengruppe (16) und eine zweite Tastengruppe (18) aufweist, die auf jeweiligen Seiten einer vertikalen Mittellinie (56) der Tastatur (14) angeordnet sind, wobei sowohl die erste als auch die zweite Tastengruppe (16, 18) eine Vielzahl von im Wesentlichen linearen Tastenreihen (50, 50', 52, 52', 54, 54') umfasst, die mindestens eine obere Reihe (50, 50') und eine untere Reihe (54, 54') umfassen, wobei die obere Reihe (50, 50') im Allgemeinen über der unteren Reihe (54, 54') angeordnet ist und jede der Reihen bezüglich der vertikalen Mittellinie (56) der Tastatur in einem Winkel (50a, 50a', 52a, 52a', 54a, 54a') von im Allgemeinen 30 bis 50 Grad angeordnet ist, **dadurch gekennzeichnet, dass** die untere Tastenreihe (54, 54') bezüglich der vertikalen Mittellinie (56) der Tastatur (14) in einem Winkel (54a, 54a') angeordnet ist, der größer als der Winkel (50a, 50a') der oberen Reihe (50, 50') bezüglich der Mittellinie ist und die Tasten der oberen Reihe (50, 50') im Wesentlichen vertikal über entsprechenden Tasten der untere Reihe (54, 54') beabstandet sind.

13. Tastatur (14) nach Anspruch 12, wobei die obere Tastenreihe für jede Tastengruppe (16, 18) eine erste Tastenreihe (50, 50') umfasst und die untere Tastenreihe eine dritte Tastenreihe (54, 54') umfasst, wobei jede Tastengruppe (16, 18) eine zweite Tastenreihe (52, 50) aufweist, wobei die Anordnung der Reihen so beschaffen ist, dass die erste Tastenreihe (50, 50') über der zweiten Tastenreihe (52, 52') angeordnet ist und die zweite Tastenreihe über der dritten Tastenreihe (54, 54') angeordnet ist, wobei die erste Tastenreihe bezüglich der vertikalen Mittellinie (56) in einem ersten Winkel (50a, 50a') angeordnet ist, die zweite Tastenreihe bezüglich der vertikalen Mittellinie in einem zweiten Winkel (52a, 52a') angeordnet ist und die dritte Tastenreihe bezüglich der vertikalen Mittellinie in einem dritten Winkel (54a, 54a') angeordnet ist, wobei der dritte Winkel größer ist als der zweite Winkel und der zweite Winkel größer ist als der erste Winkel.

14. Tastatur (14) nach Anspruch 13, wobei der erste Winkel (50a, 50a') zwischen 30 und 40 Grad gewählt wird.

15. Tastatur (14) nach Anspruch 14, wobei der zweite Winkel (52a, 52a') zwischen 34 und 44 Grad, jedoch größer als der erste Winkel (50a, 50a') gewählt wird.

16. Tastatur (14) nach Anspruch 15, wobei der dritte Winkel (54a, 54a') zwischen 40 und 50 Grad, jedoch größer als der zweite Winkel (52a, 52a') gewählt wird.

17. Tastatur (14) nach einem der Ansprüche 12 bis 16, wobei die Tastatur des Weiteren eine Leertaste (24) umfasst, die vertikal zwischen der ersten und der zweiten Tastengruppe (16, 18) angeordnet ist, wobei die Leertaste (24) so konturiert ist, dass sie zu den benachbarten Tasten in der ersten und zweiten Tastengruppe (16, 18) passt, und/oder die Tastatur ein Navigationsfeld (44) umfasst, das zwischen den oberen Reihen (50, 50') der ersten und zweiten Tastengruppe (16, 18) angeordnet ist.

18. Tastatur (14) nach einem der Ansprüche 12 bis 17, wobei die Tasten in der ersten und zweiten Tastengruppe (16, 18) Seiten aufweisen, die in einer komplementären Weise geformt sind, um zu benachbarten Tasten in derselben Reihe oder in einer benachbarten Reihe zu passen.

19. Tastatur (14) nach Anspruch 18, wobei die Tasten in der ersten und zweiten Tastengruppe (16, 18) diamantförmig sind.

20. Tastatur (14) nach einem der Ansprüche 12 bis 19, wobei zusätzliche Funktionstasten (36, 38) zwischen den oberen Reihen (50, 50') der ersten und zweiten Tastengruppe (16, 18) angeordnet sind.

21. Tastatur (14) nach einem der Ansprüche 12 bis 20, wobei die Tasten, die Buchstaben auf der Tastatur (14) darstellen, entweder gemäß einer QWERTY-Auslegung, einer AZERTY-Auslegung oder einer QWERTZ-Auslegung ausgelegt sind.

## Revendications

1. Un dispositif électronique de poche (10) configuré pour qu'un utilisateur puisse dactylographier avec les pouces, ledit dispositif électronique de poche (10) comportant un affichage (12) et un clavier (14), dans le cadre duquel ledit clavier (14) comporte un premier groupe de touches (16) et un deuxième groupe de touches (18) agencés de part et d'autre d'une ligne médiane verticale (56) dudit clavier (14), chacun desdits premier et deuxième groupes de touches (16, 18) comportant une pluralité de rangées sensiblement linéaires de touches (50, 50', 52, 52', 54, 54') comportant au moins une rangée supérieure (50, 50') et une rangée inférieure (54,54'), la rangée supérieure (50, 50') étant disposée généralement au-dessus de la rangée inférieure (54, 54'), chacune desdites rangées réalisant un angle (50a, 50a', 52a, 52a', 54a, 54a') compris généralement entre 30° et 50° par rapport à ladite ligne médiane verticale (56) du clavier, **caractérisé en ce**la que la rangée inférieure de touches (54, 54') réalise un angle (54a, 54a') par rapport à la ligne médiane verticale (56) du clavier (14) qui est plus grand que l'angle (50a, 50a') réalisé par la rangée supérieure (50, 50') par rapport à ladite ligne médiane et que les touches de la rangée supérieure (50, 50') sont espacées sensiblement à la verticale au-dessus des touches correspondantes de la rangée inférieure (54, 54').

2. Le dispositif électronique de poche (10) de la revendication 1, dans le cadre duquel, pour chaque groupe de touches (16, 18) la rangée supérieure de touches comporte une première rangée de touches (50, 50') et la rangée inférieure de touches comporte une troisième rangée de touches (54, 54'), chaque groupe de touches (16, 18) possédant une deuxième rangée de touches (52, 50), les rangées étant agencée de façon que la première rangée de touches (50, 50') soit disposée au-dessus de la deuxième rangée de touches (52, 52') et que la deuxième rangée de touches soit disposée au-dessus de la troisième rangée de touches (54, 54'), la première rangée de touches réalisant un premier angle (50a, 50a') par rapport à la ligne médiane verticale (56), la deuxième rangée de touches réalisant un deuxième angle (52a, 52a') par rapport à la ligne médiane verticale et la troisième rangée de touches réalisant un troisième angle (54a, 54a') par rapport à la ligne médiane verticale ; le troisième angle étant plus grand que le deuxième angle et le deuxième angle étant plus grand que le premier angle.

3. Le dispositif électronique de poche (10) de la revendication 2, dans le cadre duquel le premier angle (50a, 50a') est sélectionné pour être compris entre 30° et 40°.

4. Le dispositif électronique de poche (10) de la revendication 3, dans le cadre duquel le deuxième angle (52a, 52a') est sélectionné pour être compris entre 34° et 44° mais pour être plus grand que le premier angle (50a, 50a').

5. Le dispositif électronique de poche (10) de la revendication 4, dans le cadre duquel le troisième angle (54a, 54a') est sélectionné pour être compris entre 40° et 50° mais pour être plus grand que le deuxième angle (52a, 52a').

6. Le dispositif électronique de poche (10) de l'une quelconque des revendications 1 à 5, dans le cadre duquel le dispositif (10) a des côtés profilés avec des parties supérieure et inférieure de forme convexe et une partie médiane de forme concave.

7. Le dispositif électronique de poche (10) de l'une quelconque des revendications 1 à 6, dans le cadre duquel le clavier (14) comporte une touche de barre d'espacement (24) disposée à la verticale entre les premier et deuxième groupes de touches (16, 18).

8. Le dispositif électronique de poche (10) de la revendication 7, dans le cadre duquel la touche de barre d'espacement (24) est profilée pour s'ajuster aux touches adjacentes des premier et deuxième groupes de touches (16, 18).

9. Le dispositif électronique de poche (10) de l'une quelconque des revendications 1 à 8, dans le cadre duquel le dispositif comporte en outre un pavé de navigation (44) disposé entre les rangées supérieures (50, 50') des premier et deuxième groupes de touches (16, 18).

10. Le dispositif électronique de poche (10) de l'une quelconque des revendications 1 à 9, dans le cadre duquel les touches des premier et deuxième groupes de touches (16, 18) ont des côtés formés d'une manière complémentaire leur permettant de s'ajuster aux touches adjacentes de la même rangée ou d'une rangée adjacente.

11. Le dispositif électronique de poche (10) de la revendication 10, dans le cadre duquel les touches des premier et deuxième groupes de touches (16, 18) sont en forme de diamant.

12. Un clavier (14) à utiliser avec un dispositif électronique de poche (10), le clavier (14) comportant un premier groupe de touches (16) et un deuxième groupe de touches (18) agencés de part et d'autre d'une ligne médiane verticale (56) dudit clavier (14), chacun desdits premier et deuxième groupes de touches (16, 18) comportant une pluralité de rangées sensiblement linéaires de touches (50, 50', 52, 52', 54, 54') ayant au moins une rangée supérieure (50, 50') et une rangée inférieure (54, 54' ), la rangée supérieure (50, 50') étant disposée généralement au-dessus de la rangée inférieure (54, 54'), chacune desdites rangées réalisant un angle (50a, 50a', 52a, 52a', 54a, 54a') compris généralement entre 30° et 50° par rapport à ladite ligne médiane verticale (56) du clavier, **caractérisé en cela** que la rangée inférieure de touches (54, 54') réalise un angle (54a, 54a') par rapport à la ligne médiane verticale (56) du clavier (14), ledit angle étant plus grand que l'angle (50a, 50a') réalisé par la rangée supérieure (50, 50') par rapport à ladite ligne médiane, et les touches de la rangée supérieure (50, 50') étant espacées sensiblement à la verticale au-dessus des touches correspondantes de la rangée inférieure (54, 54').

13. Le clavier (14) de la revendication 12, dans le cadre duquel, pour chaque groupes de touches (16, 18), la rangée supérieure de touches comporte une première rangée de touches (50, 50') et la rangée inférieure de touches comporte une troisième rangée de touches (54, 54'), chaque groupe de touches (16, 18) possédant une deuxième rangée de touches (52, 50), les rangées étant agencées de façon que la première rangée de touches (50, 50') soit disposée au-dessus de la deuxième rangée de touches (52, 52') et que la deuxième rangée de touches soit disposée au-dessus de la troisième rangée de touches (54, 54'), la première rangée de touches réalisant un premier angle (50a, 50a') par rapport à la ligne médiane verticale (56), la deuxième rangée de touches réalisant un deuxième angle (52a, 52a') par rapport à la ligne médiane verticale, et la troisième rangée de touches réalisant un troisième angle (54a, 54a') par rapport à la ligne médiane verticale, le troisième angle étant plus grand que le deuxième angle, et le deuxième angle plus grand que le premier angle.

14. Le clavier (14) de la revendication 13, dans le cadre duquel le premier angle (50a, 50a') est sélectionné pour être compris entre 30° à 40°.

15. Le clavier (14) de la revendication 14, dans le cadre duquel le deuxième angle (52a, 52a') est sélectionné pour être compris entre 34° et 44° mais pour être plus grand que le premier angle (50a, 50a').

16. Le clavier (14) de la revendication 15, dans le cadre duquel le troisième angle (54a, 54a') est sélectionné pour être compris entre 40° à 50° mais pour être plus grand que le deuxième angle (52a, 52a').

17. Le clavier (14) de l'une quelconque des revendications 12 à 16, dans le cadre duquel le clavier comporte en outre une touche de barre d'espacement (24) disposée à la verticale entre les premier et deuxième groupes de touches (16, 18), la touche de barre d'espacement (24) étant profilée de façon à s'ajuster aux touches adjacentes des premier et deuxième groupes de touches (16,18) ; et/ou un pavé de navigation (44) disposé entre les rangées supérieures (50, 50') des premier et deuxième groupes de touches (16, 18).

18. Le clavier (14) de l'une quelconque des revendications 12 à 17, dans le cadre duquel les touches des premier et deuxième groupes de touches (16,18) ont des côtés formés d'une manière complémentaire de façon à s'ajuster aux touches adjacentes de la même rangée ou d'une rangée adjacente.

19. Le clavier (14) de la revendication 18, dans le cadre duquel les touches des premier et deuxième groupes de touches (16, 18) sont en forme de diamant.

20. Le clavier (14) de l'une quelconque des revendications 12 à 19, dans le cadre duquel des touches de fonction supplémentaires (36, 38) sont disposées entre les rangées supérieures (50, 50') des premier et deuxième groupes de touches (16, 18).

21. Le clavier (14) de l'une quelconque des revendications 12 à 20, dans le cadre duquel les touches représentant les lettres du clavier (14) sont disposées suivant la disposition QWERTY, la disposition AZERTY ou la disposition QWERTZ.
